# EUROPEAN PATENT APPLICATION

(11) **EP 4 723 716 A1**
(43) Date of publication of application: **08.04.2026**
(21) Application number: 23940031.0
(22) Date of filing: 05.06.2023
(51) Int. Cl.: H04W 24/02

(54) **COMMUNICATION METHOD, TERMINAL DEVICE, AND CORE NETWORK ELEMENT**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN); GUO, Yali, Dongguan, Guangdong 523860 (CN)
(74) Representative: Taor, Simon Edward William
(86) International application number: PCT/CN2023/098226
(87) International publication number: WO 2024/250129

(57) **Abstract**

Provided in the present application are a communication method, a terminal device, and a core network element. The method comprises: a first terminal device sending first information to a first core network element by means of a user plane message, wherein the first information is used for indicating information of a second terminal device. When the first core network element collects the information of the second terminal device, a network side can acquire the information of the second terminal device, so as to sense the second terminal device. In this case, the first terminal device may not need to acquire the information of the second terminal device by means of a private interface, thereby unbinding the first terminal device and the second terminal device. For a consumer, the consumer can purchase the first terminal device of any manufacturer, that is, the sensing of the information of the second terminal device by the network side can be realized. For manufacturers or suppliers of the second terminal device, the manufacturers or suppliers do not need to deploy servers by themselves, thereby reducing costs and network complexity.

## Description

### TECHNICAL FIELD

The present disclosure relates to the technical field of communication, and more particularly, relates to a communication method, a terminal device, and a core network element.

### BACKGROUND

A first terminal device may enable non-direct communication between a second terminal device and a network device. For example, the first terminal device may be a conventional terminal device, and the second terminal device may be a zero-power device. Conventional terminal devices can be used as transceivers for zero-power devices.

The first terminal device may achieve awareness of the second terminal device through a private interface. That is, the network cannot achieve awareness of information of the second terminal device. Since the private interface cannot realize the intercommunication between terminal devices manufactured by different manufacturers, consumers are forced to purchase both the first and second terminal devices manufactured by the same manufacturer, to enable non-direct communication of the second terminal device. Alternatively, the manufacturer or provider of the second terminal device may deploy its own business server to mitigate the bundling between the first and second terminal devices to a certain extent. However, it will increase the cost for manufacturers or service providers, and further complicates the network architecture.

### SUMMARY

The present disclosure provides a communication method, a terminal device, and a core network element. Various aspects of the present disclosure are described below.

A first aspect provides a communication method, the method includes the following operation. A first terminal device sends first information to a first core network element through a user plane message. The first information indicates information of a second terminal device.

A second aspect provides a communication method, the method includes the following operation. A first core network element receives first information from a first terminal device through a user plane message. The first information indicates information of a second terminal device.

A third aspect provides a communication method, the method includes the following operation. A second core network element sends information of a first core network element to a first terminal device. The first core network element is used to receive first information through a user plane message, and the first information indicates information of a second terminal device.

A fourth aspect provides a terminal device, the terminal device is a first terminal device, and the terminal device includes a first sending unit that is configured to send first information to a first core network element through a user plane message. The first information indicates information of a second terminal device.

A fifth aspect provides a core network element, the core network element is a first core network element, and the core network element includes a second receiving unit that is configured to receive first information from a first terminal device through a user plane message. The first information indicates information of a second terminal device.

A sixth aspect provides a core network element, the core network element is a second core network element, and the core network element includes a second sending unit that is configured to send information of a first core network element to a first terminal device. The first core network element is used to receive first information through a user plane message, and the first information indicates information of a second terminal device.

A seventh aspect provides a terminal device, including a processor and a memory for storing one or more computer programs. The processor is configured for invoking the computer programs stored in the memory, to cause the terminal device to perform some or all of the steps in the method of the first aspect.

An eighth aspect provides a core network element, including a processor, a transceiver and a memory for storing one or more computer programs, the processor is configured for invoking the computer programs stored in the memory, to cause the core network element to perform some or all of the steps in the method of the second and/or third aspects.

According to a ninth aspect, the embodiment of the present disclosure provides a communication system, including the terminal device and/or the core network element described above. In another possible design, the communication system may further include other devices that interact with the terminal device or the core network element in the solution provided by the embodiment of the present disclosure.

According to a tenth aspect, the embodiment of the present disclosure provides a computer-readable storage medium for storing a computer program that causes a terminal device and/or a core network element to perform some or all of the steps in the method of the above aspects.

In an eleventh aspect, the embodiment of the present disclosure provides a computer program product including a non-transitory computer-readable storage medium for storing a computer program, the computer program causes a terminal device and/or a core network element to perform some or all of the steps in the method of the above aspects. In some implementations, the computer program product may be a software installation package.

In a twelfth aspect, the embodiment of the present disclosure provides a chip including a memory and a processor, the processor may invoke and run a computer program to perform some or all of the steps described in the method of various aspects described above.

When the first core network element collects the information of the second terminal device, the network side may acquire the information of the second terminal device to achieve awareness of the second terminal device. In this case, the first terminal device does not need to acquire the information of the second terminal device through the private interface, thereby realizing unbinding of the first terminal device and the second terminal device. For the consumer, the consumer can purchase the first terminal device of any manufacturer, and the network side can achieve awareness of the information of the second terminal device. For the manufacturer or supplier of the second terminal device, the manufacturer or supplier does not need to deploy its own server, thereby reducing the cost and network complexity.

### BRIEF DESCRIPTION OF THE DRAWINGS

FIG. 1 is a schematic diagram of a network architecture according to an embodiment of the present disclosure.
FIG. 2 is a schematic diagram of an architecture of a zero-power communication system applicable to an embodiment of the present disclosure.
FIG. 3 is an example diagram of an architecture of non-direct communication applicable to an embodiment of the present disclosure.
FIG. 4 is a schematic flowchart of a communication method according to an embodiment of the present disclosure.
FIG. 5 is a schematic flowchart of a communication method according to a first embodiment of the present disclosure.
FIG. 6 is a schematic flowchart of a communication method according to a second embodiment of the present disclosure.
FIG. 7 is a schematic structural diagram of a terminal device according to an embodiment of the present disclosure.
FIG. 8 is a schematic structural diagram of a core network element according to an embodiment of the present disclosure.
FIG. 9 is a schematic structural diagram of another core network element according to an embodiment of the present disclosure.
FIG. 10 is a schematic structural diagram of a communication device according to an embodiment of the present disclosure.

### DETAILED DESCRIPTION

The technical solutions in the present disclosure will be described below with reference to the accompanying drawings.

### Mobile network system architecture

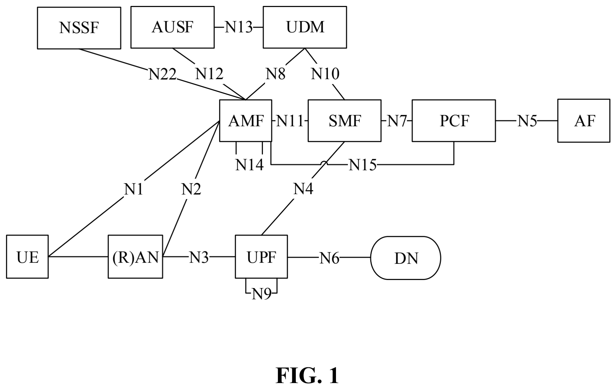

FIG. 1 is a schematic diagram of a network architecture according to an embodiment of the present disclosure. The network architecture may include a terminal device, an access network (AN) element, and a core network element. Both the access network element and the core network element may be network elements on the network side. That is, the network device may include an access network element and a core network element.

It should be understood that the technical solutions of the embodiments of the present disclosure may be applied to various communication systems, such as a fifth generation (5G) system or a new radio (NR) system, a long term evolution (LTE) system, an LTE frequency division duplex (FDD) system, an LTE time division duplex (TDD), and the like. The technical solution provided in the present disclosure may also be applied to future communication systems, such as a sixth generation mobile communication system, a satellite communication system, and the like.

The terminal device in the embodiment of the present disclosure may also be referred to as a user equipment (UE), an access terminal, a user unit, a user station, a mobile site, a mobile station (MS), a mobile terminal (MT), a remote station, a remote terminal, a mobile device, a user terminal, a terminal, a wireless core network element, a user agent, or a user device. The terminal device in the embodiment of the present disclosure may be a device that provides voice and/or data connectivity to a user, and may be used to connect people, objects, and machines, for example, a handheld device and a vehicle-mounted device having a wireless connection function, or the like. The terminal device in the embodiment of the present disclosure may be a mobile phone, a Pad, a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Optionally, the UE may be used as a base station. For example, a UE may act as a scheduling entity that provides sidelink signals between UEs in vehicle-to-everything (V2X) or device-to-device (D2D), etc. For example, cellular telephones and automobiles communicate with each other by using sidelink signals. Communication between cellular telephones and smart home devices without relaying communication signals through base stations.

The access network element may be an access network device. The access network device may be an access device with which the terminal wirelessly accesses to the network architecture, and is mainly responsible for wireless resource management, quality of service (QoS) management, data compression and encryption on the air interface side. The access network device may also be referred to as a radio access network (RAN) device, for example, the access network device may be a base station. The base station may broadly cover, or be substituted for, various names among, a NodeB, an evolved NodeB (eNB), a next generation NodeB (gNB), a relay station, an access point, a transmitting and receiving point (TRP), a transmitting point (TP), a master eNB (MeNB), a secondary eNB (SeNB), a multistandard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or the like, or a combination of them. The base station may also refer to a communication module, a modem, or a chip disposed within the aforementioned device or apparatus. The base station may further be a mobile switching center, a device that assumes the function of a base station in D2D, V2X, or machine-to-machine (M2M) communication, a network side device in a 6G network, a device that assumes the function of a base station in a future communication system, or the like. The base stations may support networks of the same or different access technologies. The embodiments of the present disclosure do not limit the specific technology and the specific device form adopted by the access network device.

The base station may be fixed or mobile. For example, a helicopter or drone may be configured as a mobile base station, and one or more cells may move according to the location of the mobile base station. In other examples, a helicopter or drone may be configured as a device to communicate with another base station.

In some deployments, the access network device in the embodiment of the present disclosure may refer to a centralized unit, CU or a distributed unit, DU, or the access network device includes a CU and a DU. The gNB may also include an active antenna unit, AAU.

The core network element may be a core network device. The type of the core network element may include a user plane function (UPF), an access and mobility management function (AMF), a session management function (SMF), a policy control function (PCF), an application function (AF), a data network (DN), a network slice selection function (NSSF), an authentication server function (AUSF), an unified data management (UDM) function, a network exposure function (NEF), a network repository function (NRF), and a network slice-specific authentication and authorization function (NSSAAF). The UPF network element is mainly responsible for the transmission of user data, and other network elements may be called control plane functional network elements, which are mainly responsible for the authentication, the authentication, the registration management, the session management, the mobility management and the policy control, etc., to ensure the reliable and stable transmission of user data.

The UPF network element may be used to forward and receive data of the terminal. For example, the UPF network element may receive service data from the data network and transmit it to the terminal through the access network device. The UPF network element may also receive user data from the terminal through the access network device and forward it to the data network. The transmission resources allocated and scheduled by the UPF network element for the terminal are managed and controlled by the SMF network element. The bearer between the terminal and the UPF network element may include a user plane connection between the UPF network element and the access network device, and establishing a channel between the access network device and the terminal. The user plane connection may enable the establishment of QoS flow for data transmission between the UPF network element and the access network device.

The AMF network element can be used to manage the terminal's access to the core network, such as the location update of the terminal, the registration of the network, the access control, the mobility management of the terminal, the attachment and the de-attachment of the terminal, and the like. In the case of providing service for a session of the terminal, the AMF network element may also provide storage resources of the control plane for the session of the terminal to store a session identification, an SMF network element identification associated with the session identification, and the like.

The SMF network element may be used to select a user plane network element for a terminal, redirect the user plane network element for the terminal, assign an internet protocol (IP) address to the terminal, establish a bearer (may also be referred to as a session) between the terminal and the UPF network element, modify, release, and QoS control of the session. The session may be a protocol data unit (PDU) session.

The PCF network element is used to provide policies, such as a QoS policy, a slice selection policy, and the like, to the AMF network element and the SMF network element.

The AF network element is used to interact with the 3GPP core network element to support the routing of application influence data, access the network exposure function, interact with the PCF network element for policy control, etc.

The DN may provide data service to a user for a network such as an IP multimedia service (IMS), the Internet, etc. There may be a variety of application servers (AS) in the DN, providing different application services, such as the operator service, the Internet access or the third-party service, and the AS can realize the functions of AF.

NSSF is used for the selection of the network slice, and the supported functions include: selecting a network slice instance set serving the UE; determining an allowed network slice selection assistance information (NSSAI) and, if needed, determining a mapping to a subscribed single-network slice selection assistance information (S-NSSAI); determining a configured NSSAI and, if needed, determining a mapping to a subscribed S-NSSAI; and determining a set of AMFs that may be used to query the UE, or determining a list of candidate AMFs based on the configuration.

The AUSF is used to receive the request of the AMF to authenticate the terminal, request the key from the UDM, and then forward the issued key to the AMF for authentication processing.

UDM includes functions such as the generation and storage of user subscription data and the management of authentication data, and supports interaction with external third-party servers.

The NEF is used for capability opening, that is, based on the NEF, the capabilities of the network can be output to an external network. External untrusted applications can access the internal data of the core network through NEF to ensure the security of the network. NEF can provide external application QoS capability opening, event subscription, AF request distribution and other functions.

NRF is used for registration, management and state detection of core network elements, so as to realize automatic management of core network elements. When the core network element is started, it must register with the NRF before providing services. The registration information may include, for example, a type, an address, and a service list of a core network element.

In addition, some networks (such as 5G networks) have also added network data analytics functions (NWDAF) to the core network. Based on the NWDAF, data can be collected from the core network's various network elements and network management systems, and big data statistics, analysis or intelligent data analysis can be performed to obtain analysis or prediction data of the network side, thereby assisting each network element in controlling terminal device access more effectively based on the data analysis results.

In some communication systems, such as 5G systems, the core network element may also be referred to as a network function (NF).

Each network element in FIG. 1 may be either a network element in a hardware device, a software function running on a special hardware, or a virtualization function instantiated on a platform (e.g., a cloud platform). It should be noted that in the network architecture illustrated in the above drawings, only network elements included in the entire network architecture are illustratively described. In the embodiments of the present disclosure, the network elements included in the entire network architecture are not limited.

Those skilled in the art will understand that the network architecture illustrated in FIG. 1 does not limit the network architecture, and when implemented, the network architecture may include more or fewer network elements than illustrated, or some network elements may be combined, etc. It should be understood that AN or RAN is denoted by the (R)AN in FIG. 1.

### Zero-power communication technology

With the development of wireless communication technology, it has become a trend to integrate wireless communication systems with various vertical industries such as logistics, manufacturing, transportation, and energy.

However, in these industries, the terminal device usually needs to have the characteristics of low cost, small size (such as ultra-thin), maintenance-free, long life, etc. In view of this, a zero-power communication technology is proposed. The zero-power communication systems can be used in various scenarios such as wireless industrial induction networks, smart agriculture, smart warehousing and logistics, and smart homes.

The zero power communication technology is a kind of wireless communication technology suitable for short distance and low speed. Taking the 5G system as an example, the 5G system in the 3GPP standard can support the need for zero-power terminals to access the network. The zero-power devices supported by the 3GPP standard are mainly intended for use in scenarios with the following characteristics: an extreme environment that is not suitable for ordinary terminals; terminals with very low power consumption and cost; and battery-free terminals.

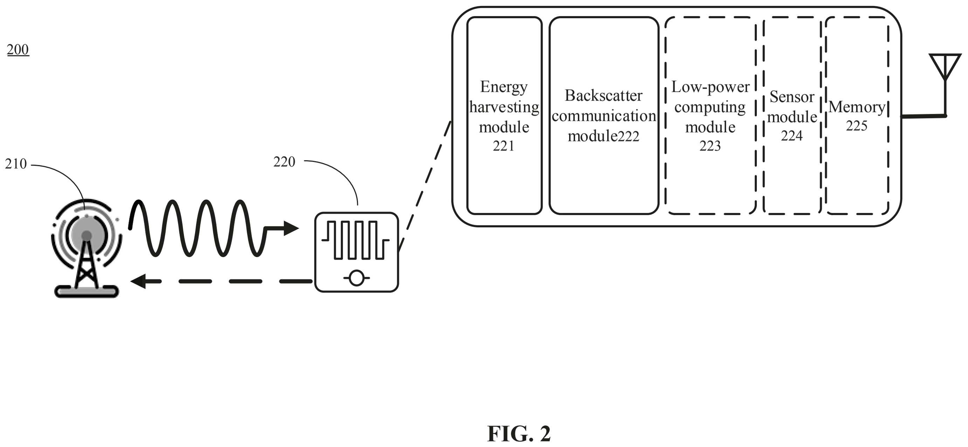

The zero-power communication technology will be described below with reference to FIG. 2.

FIG. 2 is an architecture of a zero-power communication system 200 applicable to an embodiment of the present disclosure. The architecture illustrated in FIG. 2 includes communication devices such as a reader/writer 210 and a zero-power terminal device 220. The reader/writer 210 may be used to read information of the zero-power terminal device 220, and/or the reader/writer 210 may be used to write information on the zero-power terminal device 220.

It should be noted that, the reader/writer (reader-writer) 210 is a communication device having a read and write function, and may be a network device or a terminal device.

The reader/writer 210 may be configured to send a wireless power supply signal to the zero-power terminal device 220 to power the terminal. Accordingly, the terminal 220 may send data to the reader/writer 210 or other communication devices through the backscatter signal.

The zero-power terminal device 220 may be an electronic tag or an ordinary device. The electronic tag may be composed of a coupling component and a chip. Each electronic tag may have a unique electronic code. The electronic tag can be placed on the measured target to achieve the purpose of marking the target object. The reader/writer can not only read the information on the electronic tag, but also write the information on the electronic tag. The reader/writer may also provide the electronic tag with the energy needed for communication. After the electronic tag enters the electromagnetic field, it can receive the radio frequency signal from the reader. Electronic tags can use the energy obtained by electromagnetic fields generated in space to transmit the information stored in electronic tags. The reader/writer can read the information and decode it, thereby identifying the electronic tag.

The zero-power technology mainly combines the radio frequency energy harvesting technology, the backscattering technology, and the low power computing technology to realize the advantage of equipment nodes not carrying power supply. The core of radio frequency energy harvesting is to convert radio frequency energy into DC. The energy can be stored in batteries or capacitors, or it can be collected and directly used to drive logic circuits, digital chips or sensor devices, etc., to complete the modulation and transmission of backscatter signals, the collection and processing of sensor information and other functions and applications.

As illustrated in FIG. 2, the zero-power terminal device 220 may include an energy harvesting module 221 and a backscatter communication module 222. The energy harvesting module 221 may implement energy harvesting by applying radio frequency energy harvesting technology. The backscatter communication module 222 may apply backscatter techniques for backscatter communication. As illustrated in FIG. 2, the zero-power terminal device 220 may further include one or more of a low-power computing module 223, a sensor module 224, and a memory 225.

In the zero-power communication technology, terminals can be divided into three categories based on their energy sources and energy usage methods: the passive zero-power terminal, the semi-passive zero-power terminal and the active zero-power terminal. They are introduced separately below.

### 1) Passive zero-power terminal

The passive zero-power terminal does not require a built-in battery. When the zero-power terminal approaches a reader/writer (such as a reader/writer of a radio frequency identification (RFID) system), the zero-power terminal is in the near-field range formed by the antenna radiation of the reader/writer. The passive zero-power terminal antenna generates induced current through electromagnetic induction, and the induced current drives the low-power chip circuit of the zero-power terminal, thus realizing the demodulation of the forward link signal and the modulation of the backward link signal. For backscatter links, the passive zero-power terminals use backscatter technology for signal transmission.

It can be seen that the passive zero-power terminal does not require a built-in battery to drive either the forward or backward links, making it a true zero-power terminal.

The passive zero-power terminal does not require batteries, and the radio frequency circuit and the baseband circuit are very simple, for example, they do not require devices such as a low noise amplifier (LNA), a power amplifier (PA), a crystal oscillator, and an analog to digital converter (ADC). Therefore, the passive zero-power terminal has many advantages, such as small size, light weight, low price and long service life.

The features of the passive zero-power terminal may further include: 1) no battery; 2) be able to obtain energy from the surrounding environment (such as the radio wave, the solar energy, the wind energy, the mechanical kinetic energy, etc.); 3) no universal subscriber identity module (USIM) card. This kind of terminal device can also store a certain amount of energy through the surrounding environment, but the energy is very small. Therefore, compared with the ordinary mobile phone terminal, the passive zero-power terminal supports much less functional logic.

### 2) Semi-passive zero-power terminal

The semi-passive zero-power terminal itself is not equipped with a conventional battery, but can use a radio frequency (RF) energy harvesting module to harvest radio wave energy, and store the harvested energy in an energy storage unit (such as a capacitor). After the energy storage unit obtains energy, it can drive the low-power chip circuit of the zero-power terminal, thereby realizing the demodulation of the forward link signal and the modulation of the backward link signal. For the backscatter link, the semi-passive zero-power terminal uses the backscatter technology for signal transmission.

It can be seen that the semi-passive zero-power terminal does not require a built-in battery to drive the forward link or the backward link. Although the energy stored by the energy storage unit is used in operation, the energy comes from the radio energy harvested by the energy harvesting module. Therefore, this kind of terminal device is also a true zero-power terminal.

The semi-passive zero-power terminal inherits many advantages of the passive zero-power terminal, that is, it has many advantages such as small size, light weight, low cost and long service life.

### 3) Active zero-power terminal

In some scenarios, the zero-power terminal may also be an active zero-power terminal, and such terminal may have a built-in battery. The battery is used to drive the low-power chip circuit of the zero-power terminal, so as to demodulate the forward link signal and modulate the backward link signal. However, for the backscatter link, the zero-power terminal uses the backscatter technology for signal transmission. Therefore, the zero-power of this type of terminal is mainly reflected in the fact that the signal transmission of the backward link does not require the terminal's own power, but uses backscattering.

The active zero-power terminal can have a built-in battery to supply power to the RFID chip to increase the reading and writing distance of the tag and improve the reliability of communication. Therefore, this type of terminal device can be applied in some scenarios that require relatively high communication distance, reading delay, etc.

In some embodiments, the zero-power terminal device may include an ambient power-enabled internet of things (AIoT) device.

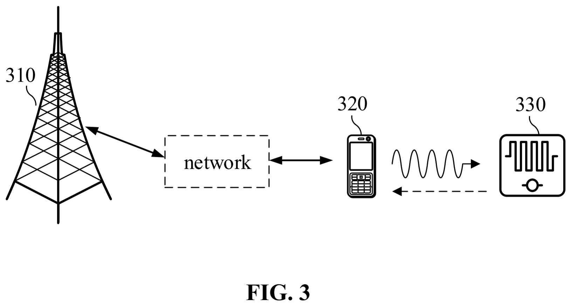

In some embodiments, the first terminal device may implement non-direct communication between the second terminal device and the network device, that is, the second terminal device may implement non-direct communication with the network device through the first terminal device. Hereinafter, FIG. 3 will be used as an example for description.

In FIG. 3, the first terminal device 320 may be, for example, a normal terminal device, and the second terminal device 310 may be, for example, an AIoT terminal device (such as a tag). As illustrated in FIG. 3, the first terminal device 320 may serve as a reader/writer of the second terminal device 330, thereby realizing backscatter communication between the first terminal device 320 and the second terminal device 330. Through the first terminal device 320, the second terminal device 330 may communicate with the network device 310. The network device 310 may be, for example, a core network element (e.g., an AF network element). The first terminal device 320 may communicate with the network device through a network, such as a 3GPP network or other wired broadband networks.

In some scenarios, the first terminal device 320 may collect information of the second terminal device 330 through a private interface. The first terminal device 320 reports the collected data of the second terminal device 330 to the AF network element through the network. In this case, only the first terminal device can achieve awareness of the second terminal device, and the network cannot achieve awareness of the second terminal device 330.

When the network cannot achieve awareness of the second terminal device, only the first terminal device can obtain information of the second terminal device through the private interface. Since the private interface cannot realize the intercommunication between terminal devices manufactured by different manufacturers, the consumers are forced to purchase both the first and second terminal devices, to enable the non-direct communication of the second terminal device. Alternatively, the manufacturer or provider of the second terminal device may deploy its own business server to mitigate the bundling between the first and second terminal devices to a certain extent. However, it will increase the cost for manufacturers or service providers, and further complicates the network architecture.

This disclosure proposes a first core network element. The first core network element may be used to collect information of the second terminal device. For example, the first core network element may be used to collect information of a specific terminal device. The specific terminal device may be a terminal device that satisfies the first condition. In some embodiments, the first condition may include that the terminal device performs non-direct communication, that is, the first core network element may have a function of collecting or gathering information of the terminal device performing non-direct communication. In some embodiments, the first condition may include that the terminal device is an AIoT device or a zero-power device, that is, the first core network element may have a function of collecting or gathering information of the AIoT device or the zero-power device.

In a case where the first core network element collects the information of the second terminal device, the network side can acquire the information of the second terminal device to achieve awareness of the second terminal device. In this case, the first terminal device does not need to acquire the information of the second terminal device through the private interface, thereby realizing unbinding of the first terminal device and the second terminal device. For the consumer, the consumer can purchase the first terminal device of any manufacturer, and the network side can achieve awareness of the information of the second terminal device. For the manufacturer or supplier of the second terminal device, the manufacturer or supplier does not need to deploy its own server, thereby reducing the cost and network complexity.

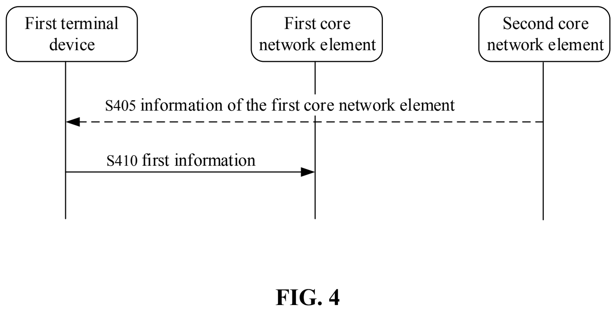

As illustrated in FIG. 4, the information of the second terminal device may be indicated by the first information.

FIG. 4 is a schematic flowchart of a communication method according to an embodiment of the present disclosure. The method illustrated in FIG. 4 may be performed by a first terminal device and a first core network element. The method illustrated in FIG. 4 may include step S410.

At S410, a first terminal device sends first information. Correspondingly, a first core network element receives the first information. The first information may be sent by a user plane message.

As described above, the first information may indicate information of the second terminal device. The information of the second terminal device may be the information directly or indirectly related to the second terminal device. For example, the information of the second terminal device may include one or more of the following information: an identity (ID) of the second terminal device, a signal sent by the second terminal device (which may include data, indication information, and the like).

The first core network element may be used to collect the information of the second terminal device. That is, the first core network element may have a function of collecting the information of the second terminal device. The second terminal device may be a specific type of terminal device. For example, the second terminal device may be an AIoT device or a zero-power device. That is, the first core network element may have a function of collecting or gathering information of an AIoT device or a zero-power device.

It is noted that the first information may be directly sent, that is, the first information may be directly sent by the first terminal device to the first core network element. Alternatively, the first information may be sent indirectly, that is, the first information may be sent by the first terminal device to another communication device, and the another communication device forwards the first information to the first core network element.

After receiving the first information, the first core network element may report the first information to other core network elements. For example, the first core network element may report the first information to the AF.

The method illustrated in FIG. 4 may further include step S405. The method illustrated in FIG. 4 may be performed by the second core network element and the first terminal device. The second core network element may be a network element different from the first core network element. For example, the second core network element may include one or more of the following network elements: an SMF network element, an AF network element.

At S405, the second core network element may send information of the first core network element. Correspondingly, the first terminal device may receive the information of the first core network element.

The information of the first core network element may be any information related to the first core network element. For example, the information of the first core network element may include one or more of the following information of the first core network element: an address, a link, a fully qualified domain name (FQDN), a data network name (DNN) address, a single network slice selection assistance information (S-NSSAI).

As illustrated in FIG. 4, S405 may be performed earlier than S410. That is, before the first terminal device sends the first information, the first terminal device may receive the information of the first core network element.

It can be understood that the first terminal device may acquire the information of the first core network element through the second core network element, thereby determining that the first core network element can be used to collect the information of the second terminal device, and further causing the first terminal device to determine the destination address of the first information.

The first core network element may be determined by the first terminal device and/or the network device. That is, the first core network element may be determined by the terminal device side or the network side. The network device that determines the first core network element may be, for example, the second core network element.

In a case where the first core network element is determined by the network side, the first terminal device may send a message requesting discovery of the first core network element. In response to the message, the second core network element may reply with the information of the first core network element, thereby causing the first terminal device to discover the first core network element. That is, S405 may include: in response to receiving the request to discover the first core network element, the second core network element sends the information of the first core network element.

In a case where the first core network element is determined by the first terminal device, the first terminal device may send the second information to enable the network side determines the first core network element. The second information may indicate information of the first core network element.

It is noted that, the step of sending the second information by the first terminal device may be performed in combination with the step of sending the first information by the first terminal device. For example, before the first terminal device sends the first information, the first terminal device may send the second information.

As an implementation, the first core network element may be determined or discovered in a PDU session establishment process. For example, S405 may be performed in the PDU session establishment process. It will be appreciated that some steps of the PDU session establishment process may be reused to determine, discover, or select the first core network element. In this case, the determination process, the discovery process or the selection of the first core network element consumes fewer resources and is more efficient.

In some embodiments, the message requesting discovery of the first core network element may be implemented based on the first request. The first terminal device may send a first request. The first request may be used to request establishment of a PDU session, and may also be used to request discovery of a first core network element. In a case that the network device (e.g., the second core network element) receives the first request, the network device may select or determine the first core network element for the first terminal device.

It is noted that, the step of sending the first request by the first terminal device may be implemented in combination with the step of sending the first information by the first terminal device. For example, before the first terminal device sends the first information, the first terminal device may send the first request. When the first terminal device receives the response of the first request, the first terminal device may send the first information.

The message carrying the first request is not limited in the present disclosure. As an implementation, the first request may be carried in an uplink (UL) non-access stratum (NAS) transmission message. For example, the first request may be carried in a request type in an uplink NAS transmission message. That is, the request type may indicate that the first request is for discovering the first core network element. In some embodiments, depending on the request type, the AMF may select an appropriate SMF. The selected SMF may select an appropriate UPF to serve the first terminal device.

In some embodiments, the first request or a message carrying the first request (e.g., the uplink NAS transmission message described above) may also be used to indicate first indication information. The first indication information may be the information related to the selection or determination of the first core network element. That is, based on the first indication information, the network device may select or determine an appropriate first core network element, thereby optimizing the communication process. For example, when a plurality of selectable core network elements for collecting AIoT device information exist in the network, the network side may further select a core network element for collecting AIoT device information that satisfies the requirements of the first indication information as the first core network element.

The first indication information may include, for example, one or more of the following information: an indication of requesting discovery of a core network element that collects terminal device information; an identification of AF; an identification of service provider; or an identification of application.

In some embodiments, the indication of requesting discovery of the core network element that collects terminal device information may be represented by one bit. As an implementation, the one bit may be 0 or 1. For example, when the indication of requesting discovery of the core network element that collects terminal device information is 1, the terminal device requests discovery of the first core network element through the indication. When the indication of requesting discovery of the core network element that collects terminal device information is 0, the terminal device does not request discovery of the first core network element through the indication. Alternatively, when the indication of requesting discovery of the core network element that collects terminal device information is 0, the terminal device requests discovery of the first core network element through the indication. When the indication of requesting discovery of the core network element that collects terminal device information is 1, the terminal device does not request discovery of the first core network element through the indication.

It is noted that, in a case where the first core network element is used to collect AIoT device information, the indication of requesting discovery of the core network element that collects terminal device information may also be referred to as indication of core network element that collects AIoT device information (AIoT device collection NF indication).

In some embodiments, the first indication information may be included in a protocol configuration option (PCO) in the first request. In the PDU session establishment process of the terminal device, the address or connection of discovery of the core network element that collects terminal device information, which the terminal device needs to establish, may be indicated to the network side (for example, the SMF network element) through the PCO. According to the first indication information, the second core network element may send the information of the first core network element to the first terminal device.

In some embodiments, the second core network element may actively send information of the first core network element to the first terminal device.

As an implementation, the second core network element may send information of the first core network element through a PCO method. For example, in a case where the first indication information is transmitted by the PCO method, the second core network element may send the information of the first core network element by the PCO method.

As another implementation, the information of the first core network element may be indicated by a parameter for establishing the PDU session. For example, the second core network element may be an AF network element. The AF network element may configure the parameter for establishing the PDU session to the first terminal device through the PCF. The parameter may include a DNN and/or S-NSSAI of the first core network element. It can be understood that in this manner, it is possible to directly instruct the establishment of a PDU session corresponding to a core network element that collects terminal device information in the PDU session establishment process.

The type of the first core network element is not limited in the present disclosure. For example, the first core network element may be a core network element specially configured for collecting terminal device information. As a possible example, the first core network element may be different from any core network element illustrated in FIG. 1. The core network element specially configured for collecting terminal device information enables its functions to operate relatively independently, thus making the operation efficiency of the core network element higher. Alternatively, the first core network element may also be any type of core network elements described above. That is, the first core network element may not only be used to collect the terminal device information, but also be used to perform other functions. On the one hand, it can reduce the number of core network elements to be configured, thereby reducing the network deployment cost of the communication system. On the other hand, the first core network element may be a core network element that needs to be selected in the PDU session establishment process. It can be understood that in the PDU session establishment process, the first core network element may be synchronously determined, thereby simplifying the discovery or determination process of the first core network element.

Optionally, the first core network element may be a UPF network element. The first core network element may be determined in the UPF selection process in the PDU session establishment process. For example, in the PDU session establishment process, when the SMF selects the UPF, it is necessary to select the UPF having the function of collecting terminal device information.

In some embodiments, the UPF may be determined based on the first indication information and/or the second information. The description of both the first indication information and the second information can be referred to above disclosure, and will not be repeatedly here.

In order to facilitate understanding, the present disclosure will be described in detail below with reference to the first embodiment and the second embodiment.

### The First Embodiment

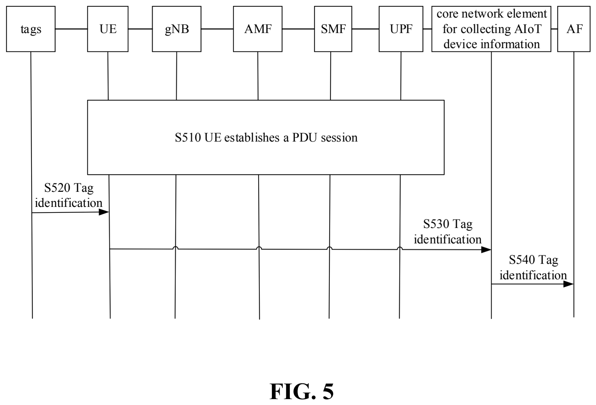

FIG. 5 is a schematic flowchart of a communication method according to the first embodiment. The method illustrated in FIG. 5 may be performed by tags, a terminal device (represented by UE in FIG. 5) acting as a reader/writer of tags, a gNB, an AMF, an SMF, a UPF, a core network element that collects AIoT device information, and an AF.

The method illustrated in FIG. 5 may include steps S510 to S540.

At S510, UE establishes a PDU session. The process of establishing the PDU session may include at least one of the following operations: the first operation, the second operation, or the third operation. The first operation to the third operation will be described below.

In the first operation, the UE sends an uplink NAS transmission message to the AMF. The request type indication in the uplink NAS transmission message is indication of core network element that collects AIoT device information (AIoT device collection NF indication). The AMF can select the appropriate SMF based on the request type. Then, the SMF may select an appropriate UPF to serve the UE. The indication of core network element that collects AIoT device information may be 0 or 1. The indication of core network element that collects AIoT device information or the uplink NAS transmission message may include one or more of: the AF information (e.g., including the ID of the AF and/or the ID of the service provider), the ID of the application, and the like.

In the second operation, the AF configures the parameter for establishing the PDU session to the UE through the PCF. The parameter may include a DNN and/or S-NSSAI corresponding to the core network element that collects AIoT device information. That is, in the PDU session establishment process, the AF may directly carry the DNN and/or the S-NSSAI to instruct the establishment of the PDU session corresponding to the core network element that collects AIoT device information.

In the third operation, in the PDU session establishment process of the UE, the address or connection of the core network element that collects AIoT device information, which needs to be established, may be indicated to the SMF through the PCO. Based on this indication, the SMF may directly send the address or FQDN of the core network element that collects AIoT device information to the UE through the PCO method. In addition, the PCO sent from the UE to the SMF may include one or more of the following information: an AF information (including, for example, an ID of the AF and/or an ID of a service provider), an ID of an application, and the like.

At S520, the UE acquires information of the tag. The information of the tag may include identification information of the tag.

At S530, the UE reports the identification information of the tag to the core network element that collects AIoT device information through the user plane message.

The address of the core network element that collects AIoT device information may be acquired through the method specified in the PCO during S510, or the FQDN of the core network element that collects AIoT device information may be directly constructed to perform DNS resolution.

At S540, the core network element that collects AIoT device information determines which AF to report the tag data, based on the identification information of the tag.

According to the method provided in the first embodiment, the UE can learn the AIoT device collection NF indication deployed in the operator network, thereby realizing unbinding between the UE and the tag, and thus realizing communication between the UE manufactured by different manufacturers and the tag.

### The Second Embodiment

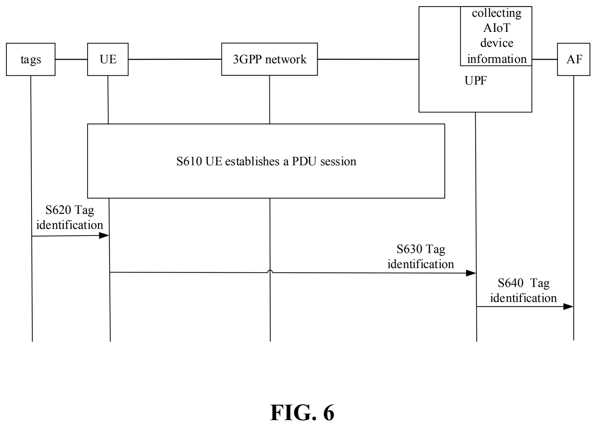

FIG. 6 is a schematic flowchart of a communication method according to the second embodiment. The method illustrated in FIG. 6 may be performed by tags (represented by tags in FIG. 6), a terminal device acting as a reader/writer of tags (represented by UE in FIG. 6), a 3GPP network, a UPF, and an AF. The 3GPP network is used to indicate the network devices involved in the method. For example, the 3GPP network may include a gNB, an AMF, an SMF, and other components illustrated in FIG. 5.

The method illustrated in FIG. 6 may include steps S610 to S640. The difference between the second embodiment and the first embodiment is that the UPF integrates the function of collecting AIoT device information.

At S610, the UE establishes a PDU session. The process of establishing the PDU session may include at least one of the following operations: the fourth operation, the fifth operation, or the sixth operation. The first operation to the third operation will be described below.

In fourth operation, the UE sends an uplink NAS transmission message to the AMF. The AMF can select the appropriate SMF based on the request type. Then, the SMF may select an appropriate UPF to serve the UE. The indication of core network element that collects AIoT device information may be 0 or 1. The indication of core network element that collects AIoT device information or the uplink NAS transmission message may include one or more of: the AF information (e.g., including the ID of the AF and/or the ID of the service provider), the ID of the application, and the like. It should be noted that when SMF selects the UPF, it is necessary to select the UPF that supports the function of collecting AIoT device information.

In fifth operation, the AF configures a parameter for establishing the PDU session to the UE through the PCF. The parameter may include a DNN and/or an S-NSSAI corresponding to the AIoT device collection NF indication. That is, in the PDU session establishment process, the AF may directly carry the DNN and/or the S-NSSAI to instruct the establishment of the PDU session corresponding to the core network element that collects AIoT device information.

It should be noted that in the PDU session establishment process, the SMF needs to select a UPF that supports the function of collecting AIoT device information based on the S-NSSAI.

In sixth operation, in the PDU session establishment process of the UE, the UE indicates the SMF through the PCO that the UPF that supports the function of collecting AIoT device information, which the UE needs to select. In the PDU session establishment process, the SMF may notify the UE through the PCO that the UPF having the function of collecting AIoT device information has been selected.

At S620, the UE acquires information of the tag, and the information of the tag may include identification information of the tag.

At S630, the UE reports the identification information of the tag to the UPF through the user plane message.

At S640, the UPF determines which AF to report the tag data based on the tag identification information.

According to the method provided in the second embodiment, the UE can learn that the function of collecting AIoT device information deployed by the UPF in the operator network can realize unbinding between the UE and the tag, and thus realize communication between the UE and the tag manufactured by different manufacturers.

The method embodiments of the present disclosure are described in detail above in conjunction with the drawings, and the device embodiments of the present disclosure are described in detail below. It should be understood that the description of the method embodiments correspond to that of the device embodiments, and therefore, the portions not described in detail herein may be referred to in the foregoing method embodiments.

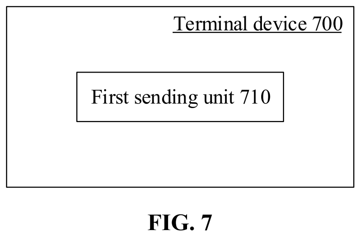

FIG. 7 is a schematic structural diagram of a terminal device 700 according to an embodiment of the present disclosure. The terminal device 700 is a first terminal device. The terminal device 700 includes a first sending unit 710.

The first sending unit 710 is configured to send first information to a first core network element through a user plane message, the first information indicates information of a second terminal device.

In some embodiments, the first core network element is determined during the PDU session establishment process.

In some embodiments, the terminal device 700 is specifically configured to send a first request to establish a PDU session, the first request is further used to request discovery of the first core network element.

In some embodiments, the first request is carried in an uplink non-access stratum (NAS) transmission message.

In some embodiments, the first request or a message carrying the first request is used to indicate first indication information, and the first indication information includes one or more of: an indication of requesting discovery of a core network element that collects terminal device information, an identification of AF, an identification of service provider, or an identification of application.

In some embodiments, the first indication information is included in the PCO in the first request.

In some embodiments, the terminal device 700 further includes a first receiving unit configured to receive information of the first core network element from a second core network element.

In some embodiments, the PDU establishment process includes: sending second information by the first terminal device, and the second information indicates information of the first core network element.

In some embodiments, the terminal device 700 further includes: an obtaining unit configured to obtain a parameter for establishing a PDU session, the parameter is used to indicate information of the first core network element.

In some embodiments, the first core network element is a UPF network element, or a core network element that collects terminal device information.

In some embodiments, in a case that the first core network element is the UPF network element, the first core network element is determined during a UPF selection process in a PDU session establishment process.

In some embodiments, the UPF is determined based on first indication information for indicating request to discover information of the first core network element, and/or second information for indicating information of the first core network element.

In some embodiments, the second terminal device is an AIoT device, and the first terminal device is a reader/writer of the AIoT device.

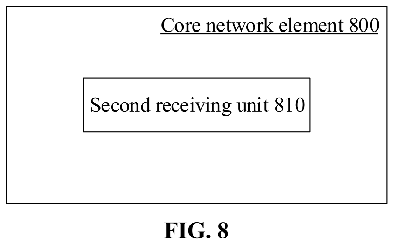

FIG. 8 is a schematic structural diagram of a core network element 800 according to the present disclosure. The core network element 800 is a first core network element. The core network element 800 includes a second receiving unit 810.

The second receiving unit 810 is configured to receive first information from a first terminal device through a user plane message, the first information indicates information of a second terminal device.

In some embodiments, the first core network element is determined during the PDU session establishment process.

In some embodiments, the first core network element is a UPF network element, or a core network element that collects terminal device information.

In some embodiments, when the first core network element is the UPF network element, the first core network element is determined during a UPF selection process in a PDU session establishment process.

In some embodiments, the information of the first core network element is sent from a second core network element to the first terminal device during the PDU session establishment process.

In some embodiments, the second terminal device is an AIoT device, and the first terminal device is a reader/writer of the AIoT device.

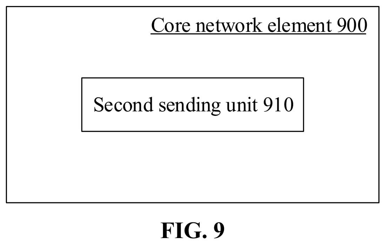

FIG. 9 is a schematic structural diagram of a core network element 900 according to an embodiment of the present disclosure. The core network element 900 is a second core network element. The core network element 900 includes a second sending unit 910.

The second sending unit 910 is configured to send information of a first core network element to a first terminal device, and the first core network element is used to receive first information through a user plane message, and the first information indicates information of a second terminal device.

In some embodiments, the first core network element is determined during the PDU session establishment process.

In some embodiments, the core network element 900 is further configured to: receive a first request to establish a PDU session, the first request is further used to request discovery of the first core network element.

In some embodiments, the first request is carried in an uplink NAS transmission message.

In some embodiments, the first request or a message carrying the first request is used to indicate first indication information, and the first indication information includes one or more of: an indication of requesting discovery of a core network element that collects terminal device information, an identification of AF, an identification of service provider, or an identification of application.

In some embodiments, the first indication information is included in a PCO in the first request.

In some embodiments, the PDU establishment process includes: receiving second information by the second core network element, the second information indicates information of the first core network element

In some embodiments, the first core network element is a UPF network element, or a core network element that collects terminal device information.

In some embodiments, when the first core network element is the UPF network element, the first core network element is determined during a UPF selection process in a PDU session establishment process.

In some embodiments, the UPF is determined based on first indication information for indicating request to discover information of the first core network element, and/or second information for indicating information of the first core network element.

In some embodiments, the second terminal device is an AIoT device, and the first terminal device is a reader/writer of the AIoT device.

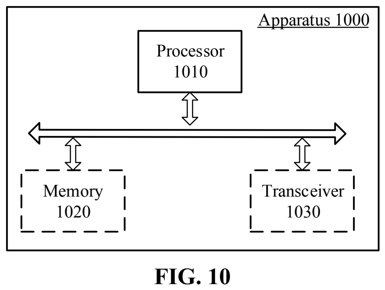

In an alternative embodiment, the first sending unit 710, the second receiving unit 810, or the second sending unit 910 may be a transceiver 1030. The terminal device 700, the core network element 800, or the core network element 900 may further include a memory 1020 and/or a processor 1010, as specifically illustrated in FIG. 10.

FIG. 10 is a schematic structural diagram of a communication apparatus according to an embodiment of the present disclosure. The dashed line in FIG. 10 indicates that the unit or module is optional. The apparatus 1000 may be used to implement the method described in the method embodiments described above. The apparatus 1000 may be a chip, a terminal device, or a network device.

The apparatus 1000 may include one or more processors 1010. The processor 1010 may support the apparatus 1000 to implement the method described in the above method embodiments. The processor 1010 may be a general purpose processor or a special purpose processor. For example, the processor may be a central processing unit (CPU). Alternatively, the processor may also be another general purpose processor, a digital signal processor (DSP), an application specific integrated circuit (ASIC), a field programmable gate array (FPGA) or other programmable logic device, a discrete gate or transistor logic device, a discrete hardware component, or the like. The general purpose processor may be a microprocessor or the general processor may be any conventional processor or the like.

The apparatus 1000 may also include one or more memories 1020. The memory 1020 has stored a program that may be executed by the processor 1010 to cause the processor 1010 to perform the method described in the above method embodiments. The memory 1020 may be independent of the processor 1010 or may be integrated in the processor 1010.

The apparatus 1000 may further include a transceiver 1030. The processor 1010 may communicate with other devices or chips through the transceiver 1030. For example, the processor 1010 may transmit and receive data with other devices or chips through the transceiver 1030.

The embodiments of the present disclosure further provide a computer-readable storage medium for storing a program. The computer-readable storage medium may be applied to a terminal or a network device provided by an embodiment of the present disclosure, and the program causes a computer to execute a method performed by the terminal or the network device in each embodiment of the present disclosure.

The embodiments of the present disclosure also provide a computer program product. The computer program product includes a program. The computer program product may be applied to the terminals or the network devices provided by the embodiments of the present disclosure, and the program causes a computer to execute the methods performed by the terminal or the network device in various embodiments of the present disclosure.

The embodiments of the present disclosure also provide a computer program. The computer program may be applied to the terminals or the network devices provided by the embodiments of the present disclosure, and the computer program causes a computer to execute the methods performed by the terminal or the network device in various embodiments of the present disclosure.

It is to be understood that the terms "system" and "network" may be used interchangeably in this disclosure. In addition, the terminology used in the present disclosure is for explanation of specific embodiments of the present disclosure only, and is not intended to limit the present disclosure. The terms "first", "second", "third", and "fourth", etc. in the specification, the claims and the accompanying drawings of the present disclosure are used to distinguish different objects, and are not used to describe a specific order. Furthermore, the terms "comprising" and "having" and any variations thereof are intended to cover non-exclusive inclusions.

In the embodiments of the present disclosure, the "indication" mentioned may be a direct indication, an indirect indication, or an associated relationship. For example, A indicates B may mean that A directly indicates B, for example, B can be acquired by A. A indicates B may also mean that A indicates B indirectly, for example A indicates C, and B can be acquired through C. A indicates B may also mean that there is an association relationship between A and B.

In the embodiments of the present disclosure, "B corresponds to A" means that B is associated with A, and B may be determined from A. However, it should also be understood that B is determined from A does not mean that B is determined from A alone, and that B may also be determined from A and/or other information.

In the embodiments of the present disclosure, the term "correspond" may indicate that there is a direct correspondence or indirect correspondence relationship between the two objects, may indicate that there is a correlation relationship between the two objects, or may indicate a relationship between indicating and being indicated, configuring and being configured, or the like.

In the embodiments of the present disclosure, "predefined" or "preconfigured" may be implemented by storing corresponding codes, tables, or other methods for indicating relevant information in advance in devices (including, for example, terminal devices and network devices), and specific implementations thereof is not limited in the present disclosure. For example, predefined may refer to definition in the protocol.

In the embodiment of the present disclosure, the "protocol" may refer to a standard protocol in the communication field, and may include, for example, an LTE protocol, an NR protocol, and related protocols applied to future communication systems, which is not limited in the present disclosure.

The term "and/or" in the embodiment of the present disclosure is only an association relationship describing an association object, and indicates that there may be three relationships. For example, A and/or B may mean that A alone exists, A and B simultaneously exist, and B alone exists. In addition, the character "/" herein generally indicates that the associated objects before and after "/" are in an "or" relationship.

In the embodiments of the present disclosure, the "include" may refer to directly including or indirectly including. Optionally, the reference to "include" in the embodiments of the present disclosure may be replaced with "indicate" or "be used to determine". For example, A includes B, can be replaced with A indicates B, or A is used to determine B.

In various embodiments of the present disclosure, the size of the sequence number of the processes described above does not mean the order of execution, and the order of execution of each process should be determined by its function and internal logic, and should not constitute any limitation on the implementation process of the embodiments of the present disclosure.

In several embodiments provided by the present disclosure, it should be understood that the disclosed systems, devices, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other illustrated or discussed may be an indirect coupling or communication connection through some interfaces, devices or units, which may be electrical, mechanical or otherwise.

The units described above as separate components may or may not be physically separate, and the components displayed as units may or may not be physical units, that is, they may be located in one place or may be distributed over a plurality of network units. Some or all of the units may be selected according to actual needs to achieve the purpose of the solution of the present embodiment.

In addition, the functional units in the various embodiments of the present disclosure may be integrated into one processing unit, or may exist as separate physical units. Two or more units may be integrated into one unit.

The embodiments described above may be implemented in whole or in part by the software, the hardware, the firmware, or any combination thereof. When implemented by using software, the embodiments may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server or data center by wired (e.g. coaxial cable, optical fiber, digital subscriber line (DSL)) or wireless (e.g. infrared, wireless, microwave, etc.) means to another website site, computer, server or data center. The computer-readable storage medium may be any available medium that may be read by a computer or a data storage device such as a server, a data center, or the like that incorporates one or more available media integrations. The available media may be a magnetic media (e.g., a floppy disk, a hard disk, a magnetic tape), an optical media (e.g., a digital video disc (DVD)), or a semiconductor media (e.g., a solid state disk (SSD)), etc.

The foregoing is merely a specific embodiment of the present disclosure, but the scope of protection of the present disclosure is not limited thereto, and changes or substitutions easily conceived by any person skilled in the art within the technical scope disclosed in the present disclosure should fall within the scope of protection of the present disclosure. Therefore, the scope of protection of the present disclosure should be subject to the scope of protection of the claims.

## Claims

1. A communication method, comprising:
sending, by a first terminal device, first information to a first core network element through a user plane message,
wherein the first information indicates information of a second terminal device.

2. The method of claim 1, further comprising:
sending, by the first terminal device, a first request to establish a protocol data unit (PDU) session,
wherein the first request is further used to request discovery of the first core network element.

3. The method of claim 2, wherein the first request is carried in an uplink non-access stratum (NAS) transmission message.

4. The method of claim 2 or 3, wherein the first request or a message carrying the first request is used to indicate first indication information, and the first indication information comprises one or more of:
an indication of requesting discovery of a core network element that collects terminal device information;
an identification of application function (AF);
an identification of service provider; or
an identification of application.

5. The method of claim 4, wherein the first indication information is comprised in a protocol configuration option (PCO) in the first request.

6. The method of claims 1 to 5, further comprising:
receiving, by the first terminal device, information of the first core network element from a second core network element.

7. The method of claim 1, further comprising:
sending, by the first terminal device, second information,
wherein the second information indicates information of the first core network element.

8. The method of any one of claims 1 to 7, further comprising:
obtaining, by the first terminal device, a parameter for establishing the PDU session,
wherein the parameter is used to indicate information of the first core network element.

9. The method of any one of claims 1 to 8, wherein the first core network element is a user plane function (UPF) network element, or a core network element that collects terminal device information.

10. The method of claim 9, wherein when the first core network element is the UPF network element, the first core network element is determined during a UPF selection process in a PDU session establishment process.

11. The method of claim 10, wherein the UPF is determined based on first indication information for indicating request to discover information of the first core network element, and/or second information for indicating information of the first core network element.

12. The method of any one of claims 1 to 11, wherein the second terminal device is an ambient power-enabled internet of things (AIoT) device, and the first terminal device is a reader-writer of the AIoT device.

13. The method of any one of claims 1 to 12, wherein the first core network element is determined during a PDU session establishment process.

14. A communication method, comprising:
receiving, by a first core network element, first information from a first terminal device through a user plane message,
wherein the first information indicates information of a second terminal device.

15. The method of claim 14, wherein the first core network element is a user plane function (UPF) network element, or a core network element that collects terminal device information.

16. The method of claim 15, wherein when the first core network element is the UPF network element, the first core network element is determined during a UPF selection process in a protocol data unit PDU session establishment process.

17. The method of claim 16, wherein information of the first core network element is sent from a second core network element to the first terminal device during the PDU session establishment process.

18. The method of any one of claims 14 to 17, wherein the second terminal device is an ambient power-enabled internet of things (AIoT) device, and the first terminal device is a reader-writer of the AIoT device.

19. The method of any one of claims 14 to 18, wherein the first core network element is determined during a PDU session establishment process.

20. A communication method, comprising:
sending, by a second core network element, information of a first core network element to a first terminal device,
wherein the first core network element is used to receive first information through a user plane message, and the first information indicates information of a second terminal device.

21. The method of claim 20, further comprising:
receiving, by the second core network element, a first request to establish a protocol data unit (PDU) session,
wherein the first request is further used to request discovery of the first core network element.

22. The method of claim 21, wherein the first request is carried in an uplink non-access stratum (NAS) transmission message.

23. The method of claim 21 or 22, wherein the first request or a message carrying the first request is used to indicate first indication information, and the first indication information comprises one or more of:
an indication of requesting discovery of a core network element that collects terminal device information;
an identification of application function (AF);
an identification of service provider; or
an identification of application.

24. The method of claim 23, wherein the first indication information is comprised in a protocol configuration option (PCO) in the first request.

25. The method of claim 20, further comprising:
receiving, by the second core network element, second information,
wherein the second information indicates information of the first core network element.

26. The method of any one of claims 20 to 25, wherein the first core network element is a user plane function (UPF) network element, or a core network element that collects terminal device information.

27. The method of claim 26, wherein when the first core network element is the UPF network element, the first core network element is determined during a UPF selection process in a PDU session establishment process.

28. The method of claim 27, wherein the UPF is determined based on first indication information for indicating request to discover information of the first core network element, and/or second information for indicating information of the first core network element.

29. The method of any one of claims 20 to 28, wherein the second terminal device is an ambient power-enabled internet of things (AIoT) device, and the first terminal device is a reader-writer of the AIoT device.

30. The method of any one of claims 20 to 29, wherein the first core network element is determined during a PDU session establishment process.

31. A terminal device, wherein the terminal device is a first terminal device, and the terminal device comprises:
a first sending unit, configured to send first information to a first core network element through a user plane message,
wherein the first information indicates information of a second terminal device.

32. The terminal device of claim 31, wherein the terminal device is further configured to:
send a first request to establish a protocol data unit (PDU) session; and
wherein the first request is further used to request discovery of the first core network element.

33. The terminal device of claim 32, wherein the first request is carried in an uplink non-access stratum (NAS) transmission message.

34. The terminal device of claim 32 or 33, wherein the first request or a message carrying the first request is used to indicate first indication information, and the first indication information comprises one or more of:
an indication of requesting discovery of a core network element that collects terminal device information;
an identification of application function (AF);
an identification of service provider; or
an identification of application.

35. The terminal device of claim 34, wherein the first indication information is comprised in a protocol configuration option (PCO) in the first request.

36. The terminal device of claims 31 to 35, further comprising:
a first receiving unit, configured to receive information of the first core network element from a second core network element.

37. The terminal device of claim 31, wherein the PDU establishment process comprises: sending, by the first terminal device, second information, the second information indicating information of the first core network element.

38. The terminal device of any one of claims 31 to 37, further comprising:
an obtaining unit, configured to obtain a parameter for establishing a PDU session,
wherein the parameter is used to indicate information of the first core network element.

39. The terminal device of any one of claims 31 to 38, wherein the first core network element is a user plane function (UPF) network element, or a core network element that collects terminal device information.

40. The terminal device of claim 39, wherein when the first core network element is the UPF network element, the first core network element is determined during a UPF selection process in a PDU session establishment process.

41. The terminal device of claim 40, wherein the UPF is determined based on first indication information for indicating request to discover information of the first core network element, and/or second information for indicating information of the first core network element.

42. The terminal device of any one of claims 31 to 41, wherein the second terminal device is an ambient power-enabled internet of things (AIoT) device, and the first terminal device is a reader-writer of the AIoT device.

43. The terminal device of any one of claims 31 to 42, wherein the first core network element is determined during a PDU session establishment process.

44. A core network element, wherein the core network element is a first core network element, and the core network element comprises:
a second receiving unit, configured to receive first information from a first terminal device through a user plane message; and
wherein the first information indicates information of a second terminal device.

45. The core network element of claim 44, wherein the first core network element is a user plane function (UPF) network element, or a core network element that collects terminal device information.

46. The core network element of claim 45, wherein when the first core network element is the UPF network element, the first core network element is determined during a UPF selection process in a protocol data unit (PDU) session establishment process.

47. The core network element of claim 46, wherein information of the first core network element is sent from a second core network element to the first terminal device during the PDU session establishment process.

48. The core network element of any one of claims 44 to 47, wherein the second terminal device is an ambient power-enabled internet of things (AIoT) device, and the first terminal device is a reader-writer of the AIoT device.

49. The core network element of any one of claims 44 to 48, wherein the first core network element is determined during a PDU session establishment process.

50. A core network element, wherein the core network element is a second core network element, and the core network element comprises:
a second sending unit, configured to send information of a first core network element to a first terminal device; and
wherein the first core network element is used to receive first information through a user plane message, and the first information indicates information of a second terminal device.

51. The core network element of claim 50, wherein the core network element is further configured to:
receive a first request to establish a protocol data unit (PDU) session; and
wherein the first request is further used to request discovery of the first core network element.

52. The core network element of claim 51, wherein the first request is carried in an uplink non-access stratum (NAS) transmission message.

53. The core network element of claim 51 or 52, wherein the first request or a message carrying the first request is used to indicate first indication information, and the first indication information comprises one or more of:
an indication of requesting discovery of a core network element that collects terminal device information;
an identification of application function (AF);
an identification of service provider; or
an identification of application.

54. The core network element of claim 53, wherein the first indication information is comprised in a protocol configuration option (PCO) in the first request.

55. The core network element of claim 50, wherein the core network element is further configured to:
receiving second information; and
wherein the second information indicates information of the first core network element.

56. The core network element of any one of claims 50 to 55, wherein the first core network element is a user plane function (UPF) network element, or a core network element that collects terminal device information.

57. The core network element of claim 56, wherein when the first core network element is the UPF network element, the first core network element is determined during a UPF selection process in a PDU session establishment process.

58. The core network element of claim 57, wherein the UPF is determined based on first indication information for indicating request to discover information of the first core network element, and/or second information for indicating information of the first core network element.

59. The core network element of any one of claims 50 to 58, wherein the second terminal device is an ambient power-enabled internet of things (AIoT) device, and the first terminal device is a reader-writer of the AIoT device.

60. The core network element of any one of claims 50 to 59, wherein the first core network element is determined during a PDU session establishment process.

61. A terminal device, comprising a processor and a memory for storing a program, wherein the processor is configured for invoking the program stored in the memory, to cause the terminal device to perform the method of any one of claims 1 to 13.

62. A core network element, comprising a processor and a memory for storing a program, wherein the processor is configured for invoking the program stored in the memory, to cause the core network element to perform the method of any one of claims 14 to 30.

63. An apparatus, comprising a processor that invokes a program from a memory to cause the apparatus to perform the method of any one of claims 1 to 30.

64. A chip, comprising a processor that invokes a program from a memory to cause a device on which the chip is mounted to perform the method of any one of claims 1 to 30.

65. A computer-readable storage medium for storing a program that causes a computer to perform the method of any one of claims 1 to 30.

66. A computer program product comprising a program that causes a computer to perform the method of any one of claims 1 to 30.

67. A computer program that causes a computer to perform the method of any one of claims 1 to 30.
